# EUROPEAN PATENT APPLICATION

(11) **EP 2 599 854 A2**
(43) Date of publication of application: **05.06.2013**
(21) Application number: 12184077.1
(22) Date of filing: 12.09.2012
(51) Int. Cl.: C10B 53/07, C10G 1/10

(54) **An arrangement for continuous processing of organic waste, in particular of contaminated waste plastics**

(30) Priority: 30.11.2011 PL 39719811
(71) Applicant: "Technologie Ekologiczne" Zbigniew Tokarz, 97-401 Kieszczow (PL)
(72) Inventor: Tokarz, Zbigniew, 97-400 Belchatow (PL)
(74) Representative: Pawlowski, Adam

(57) **Abstract**

An arrangement of devices for continuous processing of organic wastes, in particular of contaminated waste plastics and used tyres of motor vehicles, in which the batch material is liquefied and then subjected to cracking, receiving gaseous product in a gas phase, wherein the batch is introduced horizontally into a reactor (101), forced to move cyclically with a fixed frequency through melting and decomposition zones, and then, the gaseous cracking products are collected from the top and, with the use of at least one conveyor, the processed wastes are discharged, wherein each device contains a housing, a heating system, a batch loading system comprising a separate loading device (105), a system of transporting the batch material with at least one set of raking drums (2) and a fixed frequency of cyclical forced movement, a system of receiving gaseous products and a system of discharging the contaminants in a form of at least one conveyor (132), wherein the set of devices comprises at least two reactors (101) combined with a common device (102) for removing contamination and a common system (103) for receiving and fractionating gaseous products, wherein a separate loading device (105) in form of an automatic press configured to introduce the batch horizontally and slantwise down a batch input guide (120) above the surface of heated cylindrical melting bottoms (1), wherein the batch movement device comprises at least one set of raking drums (2) for batch movement across the cylindrical melting bottoms (1) with the use of clamping and scrapping fingers (6), and wherein the system for discharging contaminants contains at least one horizontal screw conveyor (132). The clamping and scraping fingers (6) of the raking drums (2) are equipped with scrapers (8).

## Description

The invention relates to an arrangement for continuous processing of organic waste, in particular of contaminated waste plastics and used tyres of motor vehicles according to a patent application PL381951. The arrangement is used to implement the process of liquefaction of wastes, that occurs on a melting surface formed by a set of parallel melting surfaces located over a space formed by a set of heating pipes. The process of thermo-catalytic cracking of wastes is carried out preferably in presence of a catalyst in order to obtain monomers or a mixture of gaseous hydrocarbons that can be used for the production of liquid fuels.

A European patent application EP 0 395 486 discloses a method of continuous heat processing of organic wastes in an apparatus, which includes a tank having a molten metal bath, through which apertured containers are transported by primary conveyer members in a plane intermediate two arrays of heating devices. Buoyancy of the waste-filled containers is resisted by abutment members within the tank while alignment elements on the containers prevent the containers from becoming askew during their travel through the tank. The abutment members may comprise fixed rails or secondary conveyor members spaced atop the primary conveyor members. Agitation devices within the tank assist in maintaining maximum heat distribution throughout the bath.; Produced hydrocarbons are collected by a main hood overlying the majority portion of the tank bath surface while separate shroud assemblies overlie other, individual isolated bath surfaces at the entrance and exit of the tank.

A US patent US 1 658 143 discloses an apparatus for distillation of oil shale and the like, comprising a distilling chamber with a corrugated bottom, a burner under the bottom, a series of transversally situated drums and mounted rotationally inside the chamber, an output conveyor reaching down to a pit below a notch with radial vanes and means for introducing shales.

The process and the apparatus disclosed in EP 0 395 486 as discussed above are particularly difficult and costly in implementation due to a huge, up to several dozen tonnes, weight of a bath of melted lead and a complex system of loading the batch and transferring it in sealed containers with one conveyor surrounding the bottom of the bath-tank, as well as due to the complex and ineffective heating system, requiring separate facilities for mixing such a large bath volume. In this process and apparatus, there is no practical way to use a catalyst to enhance the process capacity and improve the quality of final product. It also does not enable to control the transport and temperature of the liquid fraction of the melted batch. The process of discharging the remainder of the batch is troublesome.

A Polish patent application PL381951 discloses an arrangement of devices for continuous processing of organic wastes, especially contaminated waste plastics and used tyres of motor vehicles, in which the batch is liquefied and then subjected to cracking to receive a gaseous product, wherein the batch is introduced horizontally into a reactor, forced to move cyclically with a fixed frequency through melting and decomposition zones, and then, the gaseous cracking products are received from the top and, with the use of at least one conveyor, the processed contaminants are discharged. Each device comprises a housing, a heating system, a batch loading system comprising an individual loading device, a system for transporting the batch with at least one set of raking drums and a fixed frequency of cyclical forced movement, a system for receiving gaseous products and a system for discharging the contaminants in a form of at least one conveyor. The arrangement is **characterised in that** it is composed of at least two reactors coupled with a common device for removing contaminants and a common system for receiving and fractionating gaseous products. A separate loading device is constituted by an automatic press to introduce the batch horizontally and slantwise downwards via a batch input guide above the surface of heated cylindrical melting bottoms. The batch movement device is constituted by at least one set of raking drums for moving the batch across the cylindrical melting bottoms with the use of clamping and scrapping fingers, and the system for discharging contaminants contains at least one horizontal screw conveyor.

In the solution according to PL381951 there appears a problem related to the deposition of contaminants on the surfaces of the heated cylindrical melting bottoms, in particular as a result of sticking the batch residues to them. Removing those contaminants requires periodic closure of the reactor and manual removal of these substances after emptying the reactor, which significantly distorts the continuity of the reactor operation and causes a decline in its overall efficiency and additional processing problems.

The aim of this invention is to further improve the apparatus for processing different types of organic wastes in a large industrial scale, in particular of heavily contaminated waste plastics and used tyres of motor vehicles, to a form of gaseous mixture of simple monomers, preferably in the presence of a catalyst, according to the disclosure of PL381951. It is particularly the aim of the present invention to provide a simple method for automatic removal of the contamination from heated surfaces of cylindrical melting bottoms.

The object of the invention is an arrangement of devices for continuous processing of organic wastes, in particular of contaminated waste plastics and used tyres of motor vehicles, in which the batch material is liquefied and then subjected to cracking, receiving gaseous product in a gas phase, wherein the batch is introduced horizontally into a reactor, forced to move cyclically with a fixed frequency through melting and decomposition zones, and then, the gaseous cracking products are collected from the top and, with the use of at least one conveyor, the processed wastes are discharged, wherein each device contains a housing, a heating system, a batch loading system comprising a separate loading device, a system of transporting the batch material with at least one set of raking drums and a fixed frequency of cyclical forced movement, a system of receiving gaseous products and a system of discharging the contaminants in a form of at least one conveyor, wherein the set of devices comprises at least two reactors combined with a common device for removing contamination and a common system for receiving and fractionating gaseous products, wherein a separate loading device in form of an automatic press configured to introduce the batch horizontally and slantwise down a batch input guide above the surface of heated cylindrical melting bottoms, wherein the batch movement device comprises at least one set of raking drums for batch movement across the cylindrical melting bottoms with the use of clamping and scrapping fingers, and wherein the system for discharging contaminants contains at least one horizontal screw conveyor, wherein the clamping and scraping fingers of the raking drums are equipped with scrapers.

Preferably, in the set of raking drums, each raking drum comprises at least two supporting shafts: a supporting drive shaft and a supporting driven shaft, a raking drum mantle with clamping and scraping fingers, and a driving unit.

Preferably, the casings of the drive shaft and of the driven shaft have a square shape in contour of the cross-section thereof.

Preferably, each raking drum is equipped inside its heating mantle with a mechanism of longitudinal movement of clamping and scraping fingers equipped with scrapers.

Preferably, each raking drum has at least one group of clamping and scraping fingers spaced symmetrically on the circumference of raking drum heating mantle.

Preferably, each raking drum has at least two groups of clamping and scraping fingers.

Preferably, the scrapers are distant from the cylindrical melting bottom by a constant distance (y) equal from 1.00 to 10.00 mm, more preferably from 2 to 4 mm, most preferably by 2 mm.

Preferably, the scrapers have a trapezoidal shape in a side view, with a longer edge directed to the melting bottom.

Preferably, the longer edge of scrapers has a length equal from 100 to 400 mm, more preferably from 200 to 300 mm, most preferably 260 mm.

Preferably, the longer edge of the scraper has a constant thickness (x) equal from 10 to 100 mm, more preferably from 16 to 20 mm, most preferably 16 mm.

By selecting an appropriate number of groups of clamping and scraping fingers, and a number of clamping and scraping fingers within each group, their separation, shape and parameters of their movement, each area of the cylindrical melting bottom is cleaned at least once during one rotation of the raking drum. To achieve effective cleaning, the dimensions of scraper are should be adjusted with respect to its thickness and distance from the cylindrical melting bottom, as well as the rotational speed of drum mantle, on which clamping and scraping fingers with scrapers are installed.

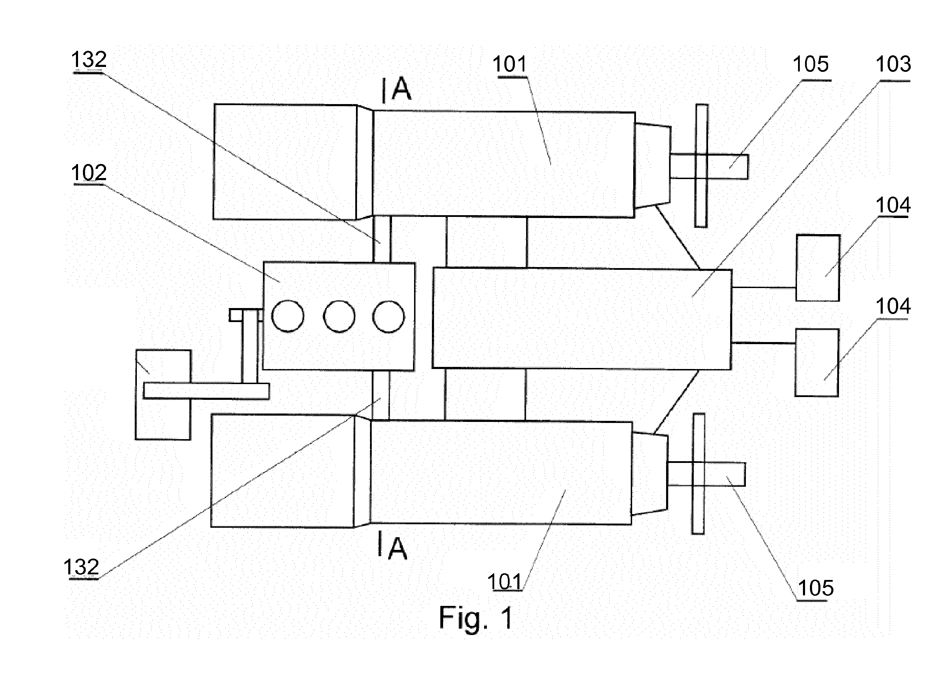

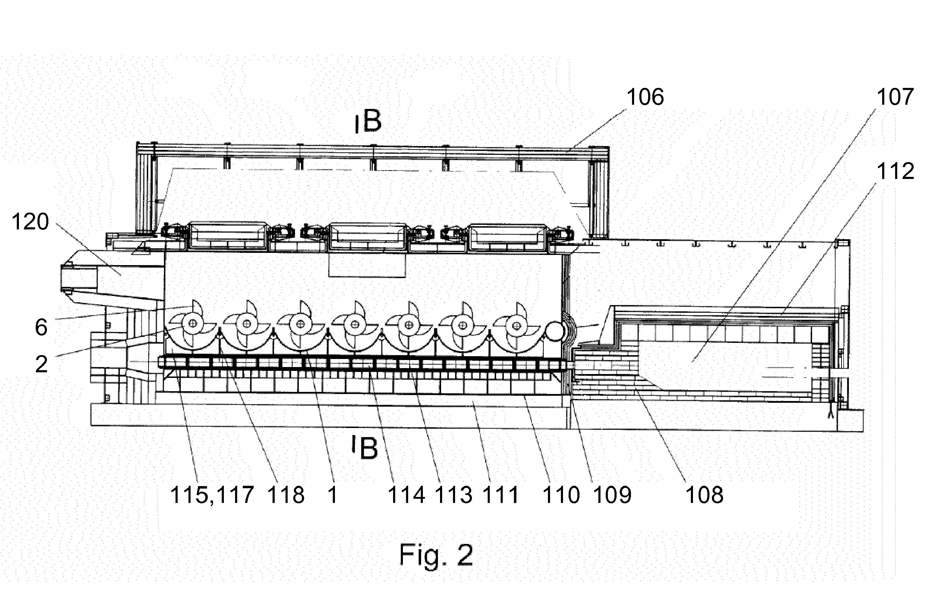

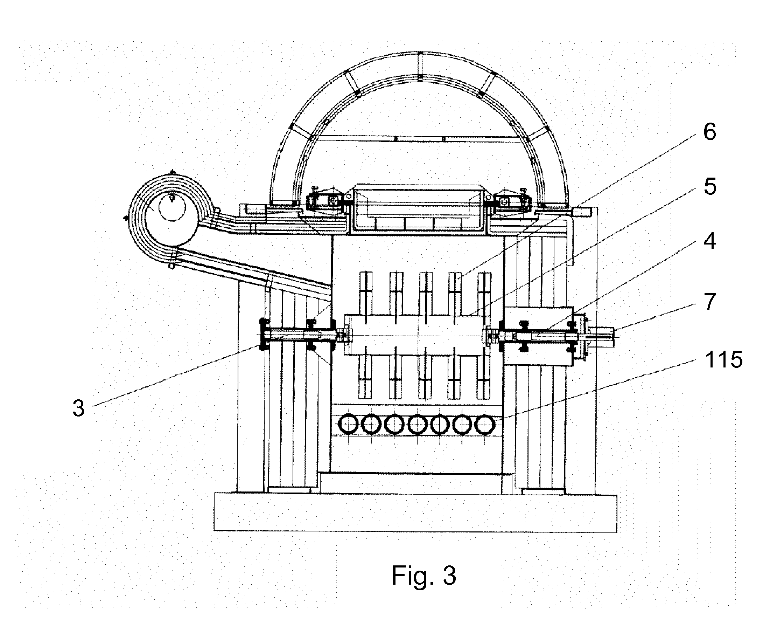

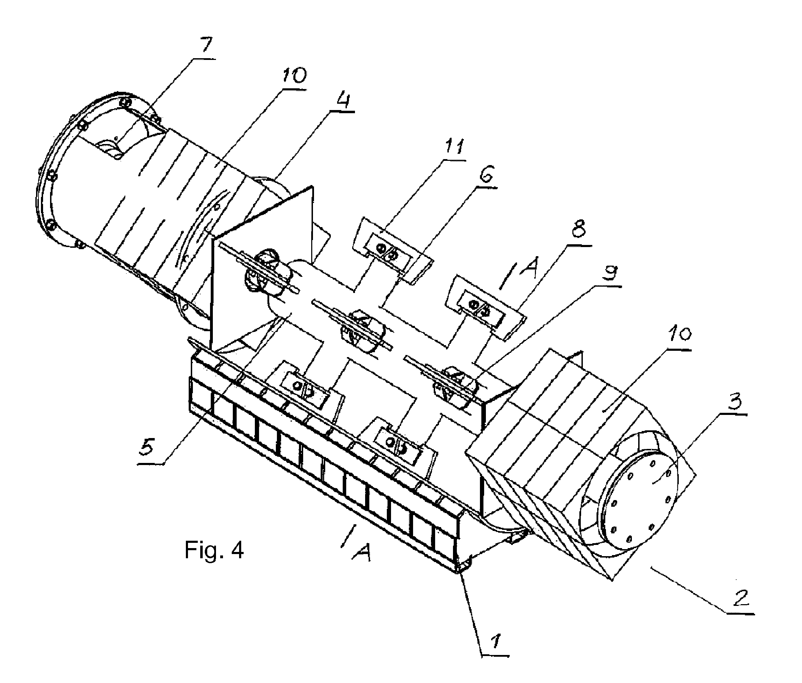

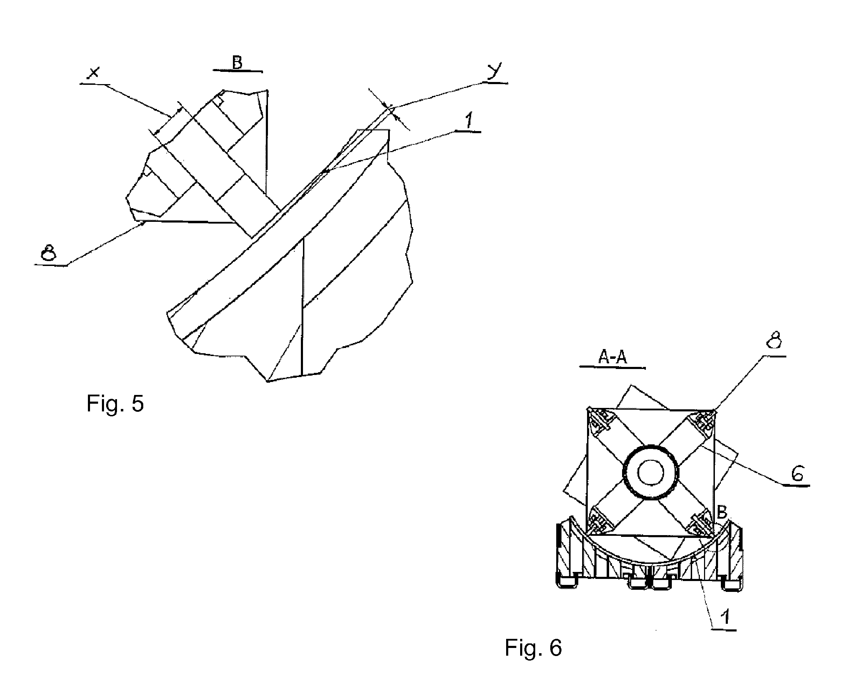

The object of the invention is shown by means of exemplary embodiment on a drawing, in which Fig. 1 shows an arrangement of devices for continuous processing of organic wastes according to PL381951, Fig. 2 shows a vertical longitudinal cross-section of the reactor according to PL381951, Fig. 3 shows a vertical cross-section along section B-B of Fig. 2 related to PL381951, Fig. 4 shows a schematic perspective view of the raking drum according to the invention, Fig. 5 presents in a partial enlarged view the relationship between the scraper and the cylindrical melting bottom (detail B of Fig. 6), and Fig. 6 presents a cross-section A-A of the raking drum presented in Fig. 4.

Fig. 1 shows an arrangement of devices for continuous processing of organic wastes according to PL381951. The arrangement will be described briefly herein, while all details of PL381951 are incorporated herein by reference. The arrangement comprises two reactors 101 combined with a common device 102 for removing contamination and a common system 103 for receiving and fractionating gaseous products, which is coupled with storage tanks 104. A separate loading device 105 has a form of an automatic press. A horizontal screw conveyor 132 is configured to output contaminations from each reactor to the common device 102 for removing contamination.

Fig. 2 shows a vertical longitudinal cross-section of the reactor 101. Each reactor 101 has a shape of a cuboid, and its casing 106 has a form of an isolator. The internal dimensions of the reactor are for example the following: width 1380 mm, length 5800 mm, height 2100 mm. The bottom part of the reactor 101, which is shown at the right side of Fig. 2, is constituted by a separate burning chamber 107 closed with a wall 108 of the burning chamber 107 and a face plate 109 of a bath 110, which is covered by a ceramic bottom thermal cover 111. The burning chamber 107 is from the top closed by a closure 112. To the burning chamber 107 there are guided inlets of flammable gas, which fuels the device. In the bath 10 there is at least one set of longitudinal heating pipes, preferably of a diameter of 139 mm, positioned in at least one layer, as shown in the drawing. The set of longitudinal heating pipes 13 has a set of identical metal inter-pipe forms 114 made of metal having a melting point of above 600⁰C and a heat conductivity coefficient above 2 W/cm⁰K, preferably of an aluminium alloy, most preferably from an alloy of aluminium and silicone, filling the space between the pipes.

Preferably, above the set of heating pipes 113 the heating arrangement comprises a set of identical bottom forms 115, preferably made of aluminium alloy, most preferably from an alloy of aluminium and silicone, which fill the space between the set of heating pipes 113 and the cylindrical melting bottoms 1, wherein each of the identical bottom forms 115 tightly fills the space between the bottom volume of the cylindrical bottom and the longitudinal bracings 117 and transverse bracings 118 of the cylindrical heating bottoms 1.

The batch material is fed via the loading device 105 configured to introduce the batch horizontally and slantwise down a batch input guide 120 above the surface of heated cylindrical melting bottoms 1.

As shown in Figs. 2 and 3, the batch movement device consists of at least one set of raking drums 2 (in the present embodiment, seven drums are presented) for moving the batch across the cylindrical melting bottoms 1 with the use of clamping and scrapping fingers 6.

As shown in Fig. 4, presenting in detail the present invention, each raking drum 2 comprises at least two supporting shafts: a supporting drive shaft 4 and a supporting driven shaft 3, a mantle 5 of a raking drum 2, clamping and scraping fingers 6 and a driving unit 7. The casings 10 of the drive 4 shaft and of the driven supporting shaft 3 in their cross-sections are of a square shape in contour. Each raking drum 2 has inside its mantle 5 a mechanism of longitudinal movement of clamping and scraping fingers 6 equipped with scrapers 8. Each raking drum 2 is equipped with at least one group of clamping and scraping fingers 6 spaced symmetrically on the circumference of the mantle 5 of the raking drum 2 (see Fig. 6). In this embodiment, each raking drum 2 is equipped with two groups of clamping and scraping fingers 6. By selecting an appropriate number of groups of clamping and scraping fingers 6, the number of clamping and scraping fingers in each group, their separation, shape and parameters of their movement, each area of the cylindrical melting bottom is cleaned at least once during one rotation of the raking drum.

As shown in Fig. 6, the scrapers 8 are separated from the cylindrical melting bottom 1 by a fixed distance y equal from 1.00 to 10.00 mm, more preferably from 2 to 4 mm, most preferably 2 mm. Fig. 5 shows that the scrapers 8 have in a side view a trapezoidal shape with a longer edge 1 directed to the melting bottom 1. The longer edge of scraper 8 has a length from 100 to 400 mm, more preferably from 200 to 300 mm, most preferably: 260 mm. The scrapers 8 have a constant thickness x (as shown in Figs. 3 and 4) from 10 to 100 mm, preferably from 16 to 20 mm, most preferably 16 mm.

## Claims

1. An arrangement of devices for continuous processing of organic wastes, in particular of contaminated waste plastics and used tyres of motor vehicles, in which the batch material is liquefied and then subjected to cracking, receiving gaseous product in a gas phase, wherein the batch is introduced horizontally into a reactor (101), forced to move cyclically with a fixed frequency through melting and decomposition zones, and then, the gaseous cracking products are collected from the top and, with the use of at least one conveyor, the processed wastes are discharged, wherein each device contains a housing, a heating system, a batch loading system comprising a separate loading device (105), a system of transporting the batch material with at least one set of raking drums (2) and a fixed frequency of cyclical forced movement, a system of receiving gaseous products and a system of discharging the contaminants in a form of at least one conveyor (132), wherein the set of devices comprises at least two reactors (101) combined with a common device (102) for removing contamination and a common system (103) for receiving and fractionating gaseous products, wherein a separate loading device (105) in form of an automatic press configured to introduce the batch horizontally and slantwise down a batch input guide (120) above the surface of heated cylindrical melting bottoms (1), wherein the batch movement device comprises at least one set of raking drums (2) for batch movement across the cylindrical melting bottoms (1) with the use of clamping and scrapping fingers (6), and wherein the system for discharging contaminants contains at least one horizontal screw conveyor (132), **characterised in that** the clamping and scraping fingers (6) of the raking drums (2) are equipped with scrapers (8).

2. The arrangement according to claim 1, **characterized in that** in the set of raking drums (2), each raking drum (2) comprises at least two supporting shafts: a supporting drive shaft (4) and a supporting driven shaft (3), a raking drum mantle (5) with clamping and scraping fingers (6), and a driving unit (7).

3. The arrangement according to claim 1, **characterized in that** the casings (10) of the drive shaft (4) and of the driven shaft (3) have a square shape in contour of the cross-section thereof.

4. The arrangement according to claim 2, **characterized in that** each raking drum (2) is equipped inside its heating mantle (5) with a mechanism of longitudinal movement of clamping and scraping fingers (6) equipped with scrapers (8).

5. The arrangement according to claim 2, **characterized in that** each raking drum has at least one group of clamping and scraping fingers (6) spaced symmetrically on the circumference of raking drum (2) heating mantle (5).

6. The arrangement according to claim 4, **characterized in that** each raking drum (2) has at least two groups of clamping and scraping fingers (6).

7. The arrangement according to claim 1, **characterized in that** the scrapers (8) are distant from the cylindrical melting bottom by a constant distance (y) equal from 1.00 to 10.00 mm, more preferably from 2 to 4 mm, most preferably by 2 mm.

8. The arrangement according to claim 1, **characterized in that** the scrapers (8) have a trapezoidal shape in a side view, with a longer edge (11) directed to the melting bottom (1).

9. The arrangement according to claim 8, **characterized in that** the longer edge (11) of scrapers (8) has a length equal from 100 to 400 mm, more preferably from 200 to 300 mm, most preferably 260 mm.

10. The arrangement according to claim 1, **characterized in that** the longer edge (11) of the scraper has a constant thickness (x) equal from 10 to 100 mm, more preferably from 16 to 20 mm, most preferably 16 mm.
